# EUROPEAN PATENT APPLICATION

(11) **EP 2 420 200 A1**
(43) Date of publication of application: **22.02.2012**
(21) Application number: 10008644.6
(22) Date of filing: 19.08.2010
(51) Int. Cl.: A61C 17/34, H02P 25/00

(54) **A circuit configuration with a vibrating motor and a method for actuating a vibrating motor**

(71) Applicant: Braun GmbH, 61476 Kronberg/Taunus (DE)
(72) Inventor: Klemm, Torsten, 65760 Eschborn (DE); Vetter, Ingo, 61184 Karben (DE); Lückel, Chris, 61476 Kronberg/Taunus (DE)

(57) **Abstract**

A circuit configuration includes a vibrating motor and a control circuit for applying an alternating voltage to the vibrating motor, wherein the control circuit has a terminal point, at which the voltage applied to the vibrating motor can be tapped in operation, and the control circuit is arranged to switch off a current flow through the vibrating motor in operation and to provide a signal in synchrony with the switching-off event.

## Description

### FIELD OF THE INVENTION

The invention relates to a circuit configuration with a vibrating motor having a control circuit to apply an alternating voltage at the vibrating motor. The invention further relates to a method for actuating a vibrating motor.

### BACKGROUND OF THE INVENTION

Circuit configurations and methods of the said type are known. Published patent application DE 102 46 520 A1describes a circuit configuration for controlling an oscillating electric motor. The circuit configuration consists of a full bridge circuit (or H-bridge circuit) by means of which the motor is supplied with an alternating voltage from a DC voltage source. As a result, in order to optimally control the oscillating motor, it is necessary to know the vibrational frequency of the motor.

To determine the vibrational frequency, for instance, the motion induced by the motor voltage can be monitored by a comparator and the attainment of a predetermined voltage, which is passed once per oscillation, can then be converted by the comparator into a trigger signal for the control. One of the comparator circuits similar to the circuit configuration mentioned above is known from patent application U.S. 2006/0214611 A1, for instance.

However, the comparatively high costs resulting from a comparator circuit through the component of the comparator is disadvantageous.

It is therefore a desire to provide a circuit configuration and a method of the said type which makes comparator functionality possible without the need of a comparator component.

### SUMMARY OF THE INVENTION

The mentioned desire is satisfied by a circuit configuration according to Claim 1 and a method according to Claim 11. Further embodiments are specified in the dependent claims.

In the proposed circuit configuration, a voltage with alternating sign is supplied to an vibrating motor by a control circuit, wherein, in operation, the control circuit is further arranged to switch off a flow of current through the vibrating motor and to provide a signal in synchrony with the switch-off event. The vibrating motor is a motor in which electromagnetic energy from a coil supplied with alternating voltage is transmitted to an attached oscillating component (which can be a permanent magnet or can comprise a permanent magnet) such that the component is set into oscillation (a linear oscillating vibration, for example, or a rotational oscillation). Such a vibrating motor has at least one resonance frequency, since the vibrating component will be pushed back into its resting position by the action of counter force (for example, if the component is suspended by springs). It is therefore advantageous if the actuating frequency, that is, the frequency of the alternating voltage or the frequency of an operating current supplied to the coil, is equal to the resonant frequency or comes close to it in a predetermined manner. Due to component tolerances, however, the determination of the resonant frequency of vibrating motors is such that the resonant frequency of the motor is not known with sufficient accuracy from the outset.

It has now been found that, in the process of the switch-off event of current flow through the vibrating motor a vibrating motor produces a voltage pulse as a system response, the level of which is typically limited by the protective circuit in the circuit configuration, and, in particular, the sign of which is determined by the sign of the motion-induced voltage at the motor at the moment of switching off or by the sign of the residual operational current flow through the motor.

Thus, by analyzing the voltage at the terminal point of the control circuit in synchrony with the switch-off event it can be determined whether the switch-off event takes place before or after a zero point of the motion-induced voltage or of the residual current. The proposed circuit configuration allows this by making the voltage at the vibrating motor available at the terminal point and provides a signal in synchronisation with the switch-off event such that an evaluation circuit can be triggered to evaluate the voltage at the terminal point. Another control process of the control circuit can then be affected by the outcome of the analysis, for instance by iteratively determining the zero crossing of the voltage curve by changing the sign of the voltage pulse. This process can be carried out when turning on a small electrical device having the proposed circuit configuration, and the resonant frequency determined for the system can be stored for later access in a non-volatile memory of the circuit configuration. The process can take place with no load and/or under (optionally different, but defined) load of the motor. Furthermore, the circuit configuration can also be used during normal operation to analyze the voltage while the load is changing in synchrony with the signal, in order to determine the changing resonant frequency of the motor resulting from the changing load.

In one embodiment, therefore, the circuit configuration has an evaluation circuit having an input connected electrically to the terminal point. The evaluation circuit is provided to evaluate the voltage at the input in operation in synchrony with the signal of the control circuit. In addition, the evaluation circuit is coupled to the control circuit to the extent that the signal of the control circuit can be transferred to the evaluation circuit, triggering it into the analytic process.

In a further embodiment, the input has a threshold voltage above which a safe high voltage level will be identified. Such input is of the I/O type, for instance, and is known in connection with micro-controllers. Typically, such input has a hysteretic operation similar to a Schmitt trigger, such that at any voltage curve at the input a high signal must not necessarily meet a certain voltage threshold, for instance, when the voltage drops from a value above the threshold voltage. A safe low level is then acknowledged only when the voltage falls below a lower threshold voltage. However, due to the design of the system, because the signal pulses to be measured are above the threshold voltage of the input (it is recognized that the voltage pulse is typically sufficiently high so as to be reduced by the protective circuit to a voltage that the micro-controller can process without damage), the hysteretic behavior of such a standard input is unimportant for the implementation of the proposed voltage analysis, in which all that must be determined is whether or not a voltage pulse has been produced by the motor. The use of an expensive analog-digital converter in this connection is not necessary since the voltage value is not analyzed with respect to its exact amplitude, but only with respect to the presence of a high-signal due to a positive voltage pulse or a low signal indicating a negative voltage pulse. Thus, in operation, as a response to the current switch-off event, in order to release a defined high-signal, the vibrating motor provides a voltage level at the terminal point, the absolute value of which is higher than the threshold voltage of the input.

In a further embodiment, the evaluation circuit is provided to evaluate in operation the voltage to be applied in connection with exceeding a threshold voltage level and/or to evaluate the duration of the voltage applied which results in a high signal. In this way, the voltage pulse width for a measured length of time can be determined from the presence of the high-signal. The width of the voltage pulse has a definite correlation with the amplitude of the motion-induced voltage at the time of the shutdown cycle.

In an embodiment of the circuit configuration, the control circuit has an H-bridge circuit made up of four switching elements in the bridge arms with the vibrating motor arranged in the bridge branch. Then, an electronic commutation as described in DE 102 46 520 A1 can be carried out and the switching elements can also be used to cut off the flow of current through the vibrating motor. The control circuit further has an driving circuit for driving the switching elements. The driving circuit and the evaluation circuit, in particular, can be implemented in a microcontroller.

In an embodiment of the circuit configuration, the vibrating motor - before current flow through the motor is provided - is short-circuited for a given period of time. When the electrical circuit is short circuited, a small current is induced in the circuit by means of the motion of the permanent motor relative to the coil of the motor, which does not affect the operating performance of the motor (the motor acts as a generator at the same time). When the short circuit is opened, the current flow through the motor is switched off. The aforementioned system response will occur, namely, a positive voltage pulse if the motion-induced voltage at the motor was positive or a negative voltage pulse if the motion-induced voltage at the motor was negative. In another embodiment, the operating current through the motor which is supplied to the motor to maintain the oscillatory motion, is switched off, typically at a time at which a zero point of the motion-induced voltage is anticipated. The sign of the voltage pulse produced by the motor then depends on the sign of the residual current flow through the motor at the time of shutdown. If the current flow is already negative, there is a positive voltage pulse; if the current flow is still positive, there is a negative voltage pulse. In particular, the switching-off events described can be implemented via a circuit configuration having an H-bridge with four switching elements.

In an embodiment, the control circuit is provided to actuate the vibrating motor with a modified actuation frequency, wherein the actuation frequency is changed depending on the voltage at the terminal point. For example, a positive voltage pulse indicates a short-circuit of the motor with no residual operating current, indicating that the motion-induced voltage at the motor was still positive and the actuation frequency is reduced. The change in the actuation frequency, in particular, is established around a frequency value, such that the optimal actuation frequency can be determined by means of an iterative modification of the actuation frequency, wherein the accuracy of the procedure depends on the frequency value established.

In a further embodiment, a load is connected to the terminal point, wherein the load emits a signal only above a threshold voltage. The signal can be an electronic signal or an optical, auditory or mechanical signal. In this way, the load can be a LED that begins to light up only when a voltage is reached that is above a threshold voltage. If this threshold voltage is selected such that it is higher than the motion-induced voltage at the motor, but lower than the voltage available at the terminal point after the switch-off event, the LED simply indicates whether the motor is operating in resonance. If the motor is operating in resonance, that is, if it is guided into resonance, no voltage pulse is produced by the switch-off event at the zero crossing, and the LED is not lit. If it is switched off before or after the zero crossing, then the high voltage pulse causes the LED to light up. The described use of a load with a signal indicating the presence of the voltage pulse is itself independent of the signal that the control circuit provides in synchrony with the switching-off. Such a load must be applied only to the voltage at the motor and the threshold voltage of the load must be selected such that it lies above the typical voltage that occurs at the motor, but below the level of the voltage pulse. In this way, a means of display is implemented indicating to a user or to a service technician, for instance, whether a voltage pulse occurs or if the system is oscillating in resonance. The latter is particularly interesting for a user if using the small electric appliance comprising the circuit configuration in resonance is the optimal mode. For example, a toothbrush which changes resonance because of an applied load placed upon it can be brought into the resonance range, thus resulting in the best cleaning results. Falling below or exceeding the load is displayed to the user by means of the load, such as an LED.

The proposed method for actuating a vibrating motor comprises the following steps:
● Creating an alternating voltage, in particular a sinusoidal alternating voltage, at the vibrating motor, wherein the alternating voltage can be provided, for instance, from a DC voltage source in which DC voltage is supplied to the motor with alternating sign (e.g. via electronic commutation).
● Generating a current flow by means of the vibrating motor. The current flow, for example, can be the operating current supplied to the motor to maintain the oscillatory motion or it can be a self-induced current, for instance, that occurs when the motor is short-circuited during its vibration when the motor is acting as a generator.
● Switching off the current flow through the motor, wherein, in particular, the switching off comes at a time at which a zero crossing of the motion-induced voltage of the motor is anticipated to occur.
● Analyzing the voltage at the vibrating motor in synchrony with the shutdown cycle. Because it has been shown that, due to the design of the system, a vibrating motor generates a voltage pulse when a current through the motor is turned off, the analysis can consist of determining whether there is a positive voltage pulse if the objective of the analysis is to determine whether the switch-off event took place before or after a zero crossing of the voltage at the motor.

In an embodiment of the method, after the analysis of the voltage, the actuating frequency of the vibrating motor is changed, wherein the change is a function of the analysis. Depending on whether a positive voltage pulse is applied or not, the actuating frequency may be increased or decreased, wherein the increase or decrease depends on whether an operating current was switched off by the motor or whether a self-induced current was switched off after a short circuit of the motor. The previously described steps for generating a current, switching off the current flow and analyzing the voltage can be repeated, wherein the actuating frequency is changed iteratively, by changing the sign of the voltage pulse, until it is in resonance optimally close to the actuating frequency of the motor.

The invention also relates to a small electrical device comprising a circuit of the foregoing type, or a small electrical device designed to carry out the described procedure. A small electrical device in particular is an electric toothbrush or a hair removal device, but is not limited to such devices. It can also be a mobile phone, the inductive load of which is an oscillatory actuator.

### BRIEF DESCRIPTION OF THE DRAWINGS

The invention will now be described in detail with reference to exemplary embodiments and drawings.
- Fig. I: shows a circuit configuration for controlling an oscillating motor according to the prior art,
- Fig. 2: shows an exemplary circuit configuration according to the present invention, and
- Fig. 3: shows schematically the voltage curve and the current flow in accordance with an exemplary embodiment.

### DETAILED DESCRIPTION OF THE INVENTION

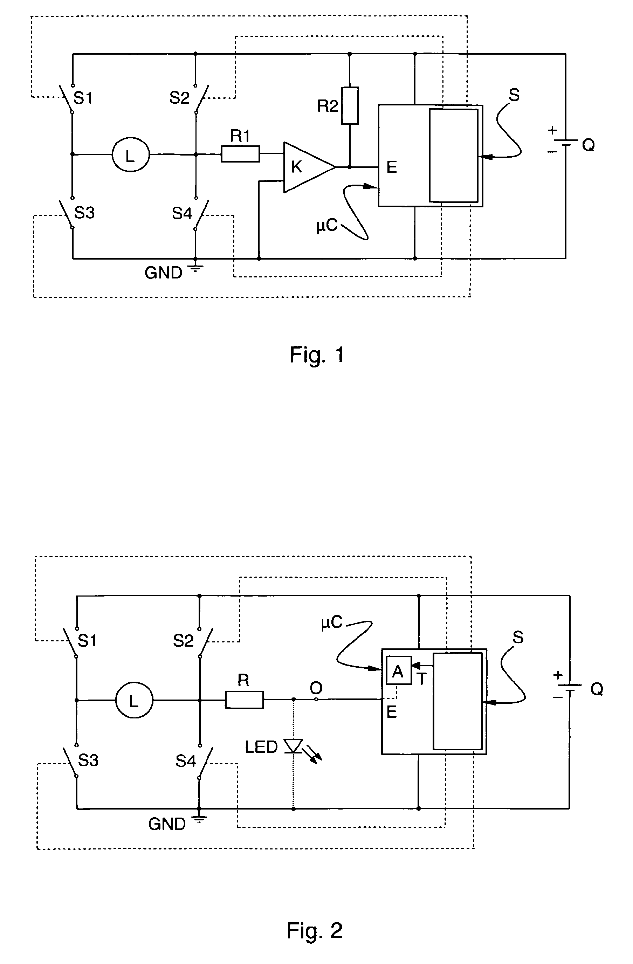

Fig. 1 schematically shows an example of a circuit for controlling a vibrating motor L. The vibrating motor L is arranged in the bridge arm of an H-bridge circuit made up of a first switching element S1, a second switching element S2, a third switching element S3 and a fourth switching element S4. The first switching element S 1 and the third switching element S3 are arranged in one half bridge, while the second switching element S2 and the fourth switching element S4 are arranged in the other half bridge. The switching elements S1, S2, S3 and S4 can be made in a known manner, such as each as a MOSFET. The vibrating motor L is connected to a first input of a comparator K by a first resistor R1. A second input of the comparator is positioned at a base potential GND, against which the voltage applied to the first input of the comparator is compared. The output of the comparator K is connected to an input E of a micro-controller µC. The positive terminal of a DC voltage source Q is connected by a second resistor R2 to the output of the comparator K. Moreover, the positive terminal of the DC voltage source Q is connected with one side of the first switching element S 1 and of the second switching element S2, while one side of each of the third switching element S3 and of the fourth switching element S4 is connected to the negative pole of the DC voltage source Q. Each of other sides of switching elements S1, S2, S3 and S4 are connected to the bridge arm, so that the vibrating motor L arranged in the bridge arm can be supplied with an alternating voltage from the DC voltage source Q by appropriate control of the switching elements S1, S2, S3 and S4. Additionally, the micro-controller µC is supplied by the DC voltage source Q. The activating circuit S is implemented by means of the microcontroller µC. The activating circuit S serves to control at least switching elements S1, S2, S3 and S4 of the H-bridge circuit. The activating circuit S and the switching elements S1, S2, S3 and S4 form a control circuit. A circuit of similar configuration is described, for example, in U.S. 2006/0214611 A1.

The vibrating motor L can be designed, in particular, as a linear oscillating linear motor. Such an oscillating motor is described in published patent application DE 102 29 319 AI. In an operating state, the activating circuit S controls switching elements S1, S2, S3 and S4 of the H-bridge circuit in such a way that voltage induced in the vibrating motor by electrical commutation has a sinusoidal curve. In order to maintain the vibration of the vibrating motor and not to have it dampened, for example, the activating circuit S feeds an operating current to the vibrating motor for a period of time in each half cycle of the voltage curve, wherein the length of time in particular can be selected to be variable such that the vibrational level of the vibrating motor remains constant or follows a predetermined course, even with different loads on the motor. When power is terminated after the end of the prescribed period of time, the H-bridge circuit, however, is short circuited for the current, and a diminished current generated from the energy stored in the motor continues to flow through the vibrating motor, leading to increased control efficiency. This is described, for example, in published patent application DE 102 46 520 A1. The H-bridge circuit should be open in such a way, i. e., the remaining current flow should be turned off in such a way (or the current directed, for example, into the DC voltage source Q by opening switching element S4 and closing switching element S2, while switching element S3 is closed and switching element S 1 is open) that there is no negative current flow, which would lead to a deceleration of the motor and thereby would impair the efficiency of the control. To avoid this, the comparator K compares the voltage at the motor L with a predetermined value, so that the zero crossing can be precisely determined due to the sinusoidal curve of the induced voltage. Based on the knowledge of the zero crossing of the voltage at the vibrating motor L, the optimal actuating frequency with which the operating power is supplied to the vibrating motor can be determined. If the actuating frequency is equal to the resonant frequency of the vibrating motor L, then the drive is operating at the highest efficiency. However, based on the knowledge of the resonance frequency (no-load or present under load), an intentional shift in the drive frequency may result.

The circuit described requires a comparator, however, to determine the zero crossing of the voltage at the inductive load, which is accompanied by consequent costs. In this connection, either the third switching element S3 or the fourth switching element S4 must be switched on to allow the comparator to function.

Fig. 2 shows a circuit configuration which facilitates the desired result, namely attaining a precise determination of the drive frequency without the need of a comparator.

As in Fig. 1, in Fig. 2 a vibrating motor L is also arranged in the bridge arm of an H-bridge circuit made up of a first switching element S1, a second switching element S2, a third switching element S3 and a fourth switching element S4. The first switching element S 1 and the third switching element S3 are configured in one half-bridge while the second switching element S2 and the fourth switching element S4 are arranged in the other half-bridge. The switching elements S1, S2, S3 and S4 can be made in a known manner, such as each made as a MOSFET. Thus, the vibrating motor L is electrically coupled with a first connection between the first switching element S1 and the third switching element S3, and is coupled electrically with a second connection between the second switching element S2 and the fourth switching element S4. The voltage present at the swinging motor L can be measured by means of a terminal point O arranged between the second switching element S2 and the fourth switching element S4. The terminal point O is electrically connected via a resistor R with an input I of a micro-controller µC. In the illustrated embodiment, a driving circuit S is implemented by the micro-controller µC. In this connection, however, the possibility should not be excluded that the driving circuit S can be realized as a stand-alone integrated circuit or as an analog circuit. Driving circuit S controls the switching elements S1, S2, S3 and S4 of the H-bridge circuit, which control functionality is indicated in Fig. 2 by dashed lines. The control may be accomplished by means of commutation phases as described in DE 102 46 520 A1. The appropriate description section of DE 102 46 520 A1 is therefore intended to be included in this description by reference. Driving circuit S and switching elements S1, S2, S3 and S4 form the control circuit. The positive terminal of a DC voltage source Q is connected with one side of each of the first switching element S 1 and the second switching element S2, while one side of each of the third switching element S3 and of the fourth switching element S4is connected to the negative pole of the DC voltage source Q. Each of the other sides of switching elements S1, S2, S3 and S4 are connected to the bridge arm, so that the vibrating motor L arranged in the bridge arm can be supplied with an alternating voltage from the DC voltage source Q by appropriate control of the switching elements S1, S2, S3 and S4. Additionally, the micro-controller µC is supplied by the DC voltage source Q. The driving circuit S, which activates switching elements S1, S2, S3 and S4, here also controls the current flow through the vibrating motor L. Therefore, in an operating state, as soon as the driving circuit S switches off a current flow through the vibrating motor L (for example, when the switching elements, S1, S2, S3 and S4 are controlled so that a - possibly residual - current flow is diverted through the vibrating motor L), the driving circuit S produces the signal T in synchrony with the switch-off event, which, in the embodiment shown, is used by an evaluation circuit A to evaluate the signal that is provioded at the input E of the micro-controller µC, based on the voltage applied at terminal point O. The input E is a standard input of a micro-controller µC, in which a unique high-output signal is produced or detected when the applied voltage is above an upper threshold voltage and a unique low-signal is produced or detected when the applied voltage is below a lower threshold voltage. Such input from the I / O type has a hysteretic behavior, as is known from a Schmitt trigger, and therefore can not serve to precisely analyze any applied voltage signal.

The mode of operation of the circuit configuration for determining (at least approximately) an optimal actuating frequency according to Fig. 2 will now be illustrated by two examples. Because vibrating motors have manufacturing tolerances and component tolerances, the resonance frequency can not be determined a priori with sufficient accuracy.

### Example 1: Short circuiting the H-bridge circuit and switch-off event with synchronized voltage analysis

In the first example, the vibrating motor L is activated by a short circuit of the H-bridge circuit. In the case of a short circuit, the third switching element S3 and the fourth switching element S4 are closed, for example, or the first switching element S 1 and the second switching element S2 are closed and each of the other switching elements are open, such that the short circuited circuit is disconnected from the DC voltage source Q (such as a battery or an accumulator). In doing so, the driving circuit S accordingly controls the corresponding switching elements S1, S2, S3 and S4. As a result, a small current, generated by self-induction, flows through the vibrating motor L, but this does not interfere with the operation of the vibrating motor L. In the case of a short circuit, the voltage induced in the vibrating motor L becomes a source voltage. After a predetermined time interval, the driving circuit S controls switching elements S1, S2, S3 and S4 such that the electric current is switched off, i. e., the short circuit is opened by opening the fourth switching element S4, for example, if the third switching element S3 and the fourth switching element S4 were previously closed. The feedback voltage of the vibrating motor L, that is, the voltage provided by the described switching off of the flow at terminal point O, can then be evaluated in synchrony with the switching-off event. The driving circuit S, which causes the switch-off event by opening the fourth switching element S4, provides the T signal in synchrony with the switch-off event. In the example discussed, the signal T is supplied to an evaluation circuit A, which then evaluates the voltage applied to the input E of the micro-controller µC, in synchrony with the switch-off event. It has turned out that the feedback voltage of the vibrating motor L is always a voltage pulse the amplitude of which is essentially independent of the amplitude of the voltage induced by the motor and is limited by the protective circuit of the H-bridge circuit. The voltage feedback is the inductive reactance voltage (back-EMF) of the vibrating motor. This voltage is dependent on the inductance of the vibrating motor at the time of switch-off and the first derivative of the current over time, d*I l* d*t.* The voltage pulse is positive if the voltage at the vibrating motor L is positive at the moment of the switch-off event, and the voltage pulse is negative if the voltage applied to the oscillating motor L is negative. Due to the high voltage pulses which are present during the current switch-off event as a system response at the input E of the micro-controller µC, the signal of the input E is always unambiguous, if the protective circuit of the H-bridge allows the voltage pulses, which - if they are positive - lie above the upper threshold voltage of the input E, or which - if they are negative - are below the lower threshold voltage. However, all that is relevant in the further analysis discussed below is that the positive voltage pulse can be identified as a high-signal.

The control circuit performs the first switch-off event at a time at which a zero crossing of the (motion-induced) voltage is expected at a reference motor, as a result of its known resonance frequency. Thus, a measured high signal indicates that, because the voltage at the vibrating motor was still positive, the actuating frequency of the control circuit has become too high. The actuating frequency can then be reduced by a given frequency increment. If, in a repeated process of performing the short circuiting and switching off the flow of current, a high signal continues to be measured, the actuating frequency is further incrementally reduced until, after repeating the process, a high signal is no longer measured. The accuracy with which the zero crossing of the voltage on the vibrating motor L, and thus the actuating frequency, can be determined, depends on the frequency increment that the driving circuit S uses to iteratively determine the zero crossing. If no high-signal is measured in a first operation of short-circuit and switch-off event, then this is evidence of a negative voltage at the vibrating motor at the moment of measurement or, for the zero crossing of the voltage. Instead of reducing the actuating frequency, the actuating frequency is then increased incrementally until a first high signal is measured. The control frequencies determined in this way are at least approximately optimal and the accuracy can be determined by the value of the frequency increment.

To increase accuracy in determining the zero crossing, a smaller frequency increment can be selected after a first determination of the zero crossing and, instead of reducing (or increasing) the actuating frequency, it is increased (or reduced) until the zero crossing is again traversed.

The process described may be used, in particular, when the vibrating motor has been installed in a small electrical device and the optimal actuating frequency is to be stored in a non-volatile memory (e. g., an EPROM, which can be a component of the micro-controller). The optimal actuating frequency found can then be accessed each time the device is operated. However, the small electrical device can also be programmed to automatically determine a change of actuating frequency again after a certain number of operations to capture a change in the actuating frequency, as a result of wear or the like.

### Example 2: Switching off the current after supplying the operating current

In the second example, current (the operating current necessary to power the vibrating motor) is supplied to the vibrating motor L in each half wave of the voltage to maintain the vibratory amplitude of the motor L. After the power supply is stopped, the H-bridge circuit is closed for a short time, so that the (decreasing) current can continue to flow through the vibrating motor. The short circuit is then opened by the control circuit (thus, if the third switching element S3 and the fourth switching element S4 were closed, the activating circuit S triggers the switching element S4, in order to open it), which shuts off the flow of current through the vibrating motor L. The moment of switching-off is initially selected so that it would corresponds to the zero crossing of the voltage if the motor had the resonance frequency of a reference motor. The driving circuit S then again provides a signal T in synchrony with the switch-off event so that the voltage response of the system, which is available at the terminal point, can be evaluated in synchrony with the switch-off event, which is carried out by the evaluation circuit A, which is implemented in the micro-controller µC, in the example discussed. It has been shown here that the voltage response of the system is a positive voltage pulse if the voltage at the vibrating motor is negative, and a negative voltage pulse if the voltage at the vibrating motor is positive. Thus, if a high signal is detected at the input E of the micro-controller, then the actuating frequency is increased by a frequency increment, and the process is repeated. If the operating current is supplied in each half wave, then the next measurement is made at the next half cycle, wherein the corresponding sign of the voltage pulse is taken into account. The iterative process of finding the zero crossing of the voltage, or at least the approximately optimal actuating frequency, is then carried out as in the first example.

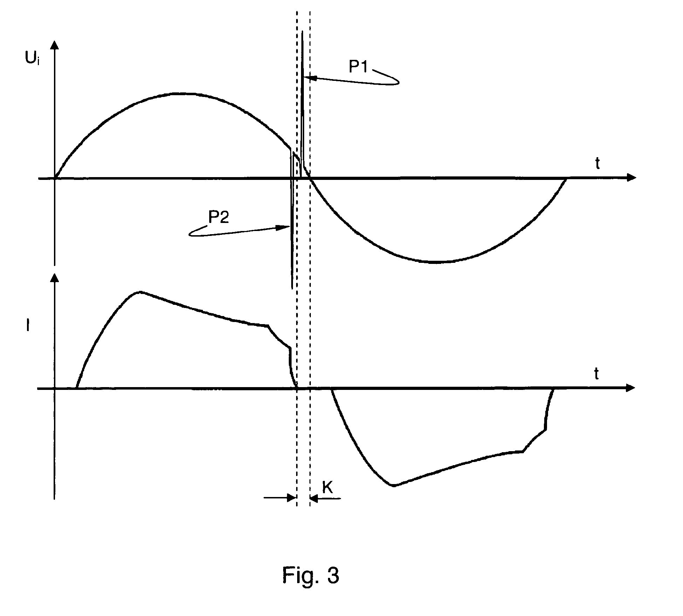

Fig. 3 schematically shows the voltage curve of the motion-induced voltage Uᵢ at the vibrating motor and the path of the flow of operating current I. The voltage curve and the operating current path is essentially the same as the voltage curve and operating current path shown in DE 102 46 520 A1, and the operating current curve is caused by the different phases of electronic commutation. In the voltage curves, for example, two voltage pulses P1 and P2 are illustrated. Furthermore, the voltage pulse P1 corresponds to a voltage pulse according to the first example. The operating current I is already switched off and in the interval K no operating current is flowing through the vibrating motor. Then, in interval K, the vibrating motor is short-circuited, which induces a small current flow through the motor and the current flow is subsequently switched-on again by opening the short circuit. Because the motion-induced voltage Uᵢ is positive here, the voltage response of the vibrating motor is a positive voltage pulse P1. The voltage pulse P2 corresponds to the second example. Here, the operating current I is switched off. Since the operating current I is still positive at the moment of switch-off, the voltage response of the vibrating motor is a negative voltage pulse P2.

The dimensions and values disclosed herein are not to be understood as being strictly limited to the exact numerical values recited. Instead, unless otherwise specified, each such dimension is intended to mean both the recited value and a functionally equivalent range surrounding that value. For example, a dimension disclosed as "40 mm" is intended to mean "about 40 mm."

## Claims

1. A circuit configuration comprising:
a vibrating motor (L); and
a control circuit (S; S1, S2, S3, S4) for applying an alternating voltage to the vibrating motor (L);
wherein the control circuit (S; S1, S2, S3, S4) has a terminal point (O), at which the voltage applied to the vibrating motor (L) can be tapped in operation, and the control circuit (S; S1, S2, S3, S4) is arranged to switch off a current flow through the vibrating motor (L) in operation, and to provide a signal (T) in synchrony with the switching-off event.

2. The circuit configuration according to Claim 1 which comprises an evaluation circuit (A) having an input (E) that is electrically connected with the terminal point (O) and the evaluation circuit (A) is designed to receive the signal (T) fed to the control circuit (S, S1, S2, S3, S4) in operation, and to evaluate the voltage at the input (E) of the evaluation circuit (A) in synchrony with the switching-off event.

3. The circuit configuration according to Claim 2, wherein the input (E) has a threshold voltage for reliable identification of a high-signal.

4. The circuit configuration according to Claim 3, wherein the evaluation circuit (A) is provided to evaluate in operation the voltage at the input (E) with respect to exceeding the threshold voltage and/or the duration of exceeding the threshold voltage.

5. The circuit configuration according to any one of Claims 1 to 4, wherein the control circuit (S; S1, S2, S3, S4) has an H-bridge circuit composed of four switching elements (S1, S2, S3, S4) for the electronic commutation of the vibrating motor (L) and a driving circuit (S).

6. The circuit configuration according to Claim 5, wherein the driving circuit (S) and the evaluation circuit (A) are implemented in a microcontroller (µC).

7. The circuit configuration according to any one of Claims 1 to 6, wherein the control circuit (S; S1, S2, S3, S4) is arranged to short-circuit the vibrating motor (L) in operation for a given brief period of time so that a self-induced current flows through the vibrating motor (L) and to switch-off the flow of current by terminating the short circuit.

8. The circuit configuration according to any one of Claims 1 to 6, wherein the control circuit (S; S1, S2, S3, S4) is arranged to switch-off an operating current through the vibrating motor (L) during operation.

9. The circuit configuration according to any one of Claims 1 to 8, wherein the control circuit (S; S1, S2, S3, S4) is arranged to actuate the vibrating motor (L) during operation with a modified frequency as a function of the voltage applied at the terminal point (O) following the switch-off event of the current.

10. The circuit configuration according to any one of Claims 1 to 9, wherein a load (LED) is connected to the terminal point (O) and the load (LED) has a threshold voltage, above which the load (LED) emits a signal in operation.

11. A method for actuating a vibrating motor (L), comprising the following steps:
a. application of an alternating voltage to the vibrating motor (L);
b. generation of a current flow through the vibrating motor (L);
c. switching-off of the current flow; and
d. evaluation of a voltage at the vibrating motor (L) in synchrony with the switching-off step.

12. The method according to Claim 11, comprising the further step of changing an actuating frequency of the vibrating motor (L) as a function of the evaluated voltage in such a way that the switching-off step is brought into at least approximate agreement with a zero crossing of the voltage on the vibrating motor (L), wherein, in particular, Steps b, c and d are repeated and the actuating frequency is changed iteratively.

13. A small electric appliance, in particular an electric toothbrush or an electric hair removal device that has a circuit configuration according to any one of Claims 1 to 10.

14. The small electric appliance, in particular an electric toothbrush or an electric hair removal device that is equipped to carry out a method according to any one of Claims 11 or 12.
